# EUROPEAN PATENT APPLICATION

(11) **EP 2 324 725 A1**
(43) Date of publication of application: **25.05.2011**
(21) Application number: 10176539.4
(22) Date of filing: 14.09.2010
(51) Int. Cl.: A43B 23/02, A43B 3/02, B29D 35/00, B29D 35/06

(54) **TPU rain boot**

(30) Priority: 20.11.2009 TW 098139508
(71) Applicant: Wu, Tsung-Ta, Taichung City (TW)
(72) Inventor: Wu, Tsung-Ta, Taichung City (TW)
(74) Representative: Becker Kurig Straus

(57) **Abstract**

The TPU rain boot has a sole section (10) and a foot section (20). The foot section (20) is made of TPU and mounted on a contour edge of the sole section (10) by a thermal compressing process and has a front slice (22), two side slices (23) and a top opening (21). The front slice (22) is mounted on the contour edge of the sole section (10) and covers a tiptoe part of the sole section (10). The side slices (23) are mounted on the sole section (10) and surround a heel part of the sole section (10). Each side slice (23) has a front end overlapped and mounted on the front slice (22) and a rear end overlapped and mounted on the rear end of the other side slice (23) with a thermal compressing process. The top opening (21) is formed and surrounded by the side slices (23).

## Description

### 1. Field of the Invention

The present invention relates to a boot, and more particularly to a TPU (Thermoplastic Polyurethane) rain boot with a foot section connected to a sole section with a thermal compressing process to provide a waterproof function.

### 2. Description of Related Art

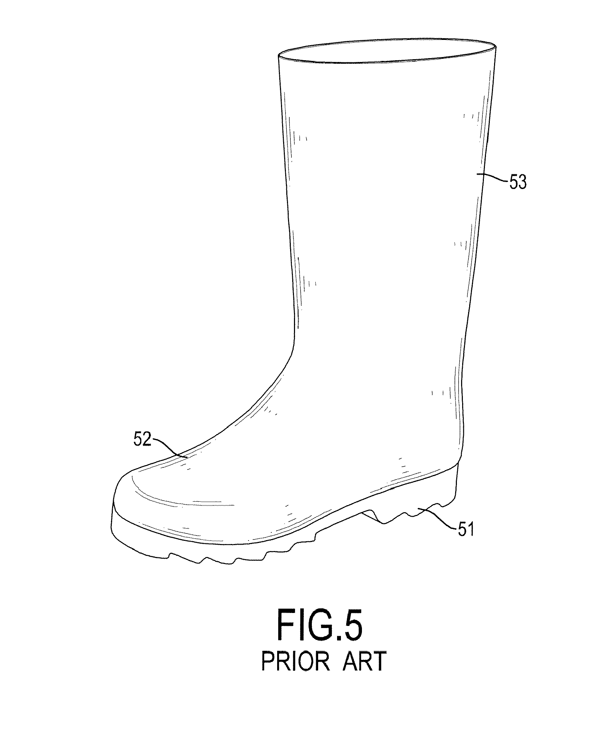

With reference Fig. 5, a conventional rain boot is made of plastic by injection molding, and is implemented as a sole section 51, a foot section 52 and a shank section 53. The sole section 51 has a contour edge. The foot section 52 is formed on and protrudes from the contour edge of the sole section 51. The foot section 52 is hollow and has a foot containing space. The shank section 53 is formed on and protrudes from the foot section 52, shapes tubular and has a top opening communicating with the foot containing space of the section 52.

However, the conventional rain boot is made of plastic by injection molding by a mold and is heavy and not easy to change the shape.. Consequently, the conventional rain boot is unvaried, cumbersome and unaesthetic. Furthermore, the conventional rain boot has no soft inner pad in the rain boot and causes uncomfortable feeling to a user.

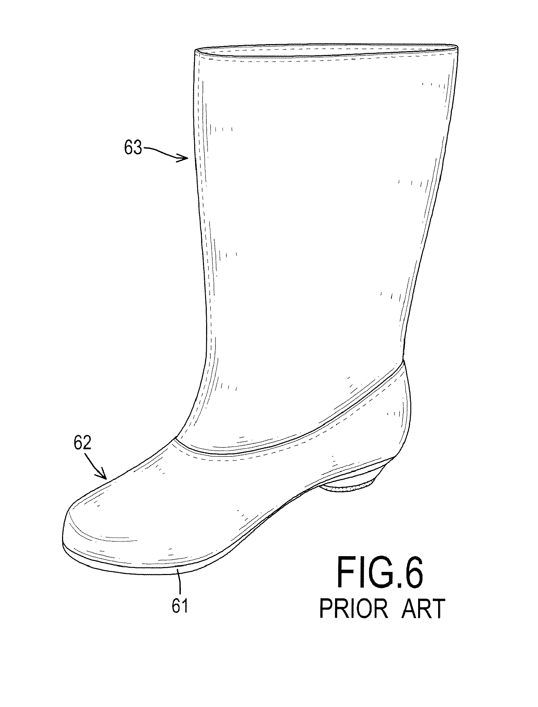

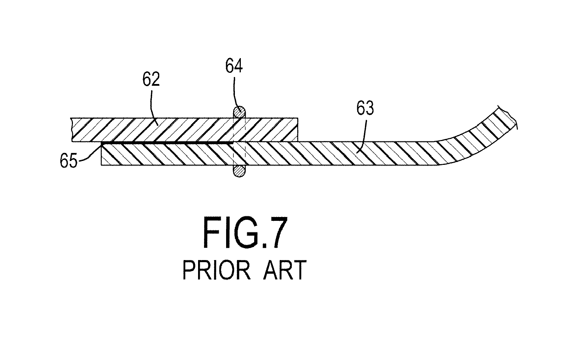

With reference Figs. 6 and 7, another conventional rain boot is made of PVC (Polyvinyl Chloride) is provide to reduce a weight and change a shape easily of the rain boot. The rain boot has a sole section 61, a foot section 62 and a shank section 63. The sole section 61 has a contour edge and may have a heel to improve aesthetic and variety. The foot section 62 is mounted on the contour edge of the sole section 61 and is implemented by multiple foot slices sewed to each other to form a foot containing space and has a top edge. The shank section 63 is partially overlapped with the top edge of the foot section 62 and is sewed with and pasted onto the foot section 62 by a sewing line 64 and a glue layer 65. The shank section 62 is tubular, communicates with the foot containing space of the foot section 62 and may be implemented by multiple shank slices sewed to each other. The foot section 62 and the shank section 63 may be changed easily in shapes and have various types.

However, the foot section 62 and the shank section 63 of the conventional rain boot are sewed with each other by the sewing line and cause multiple needle holes. Even if the sole section 61, the foot section 62 and the shank section 63 of the conventional rain boot are made of PVC and is waterproof, the water permeates into the rain boot from the needle holes. Furthermore, the conventional rain boot cannot be implemented with a soft layer that is sewed on an inner surface of the rain boot because the soft layer causes multiple needle holes in the rain boot and permeable to water into the rain boot.

To overcome the shortcomings, the present invention tends to provide a rain boot to mitigate or obviate the aforementioned problems.

The main objective of the present invention is to provide a TPU rain boot with a foot section hot connected to a sole section with a thermal compressing process to provide a waterproof function.

The TPU rain boot has a sole section and a foot section. The sole section has a contour edge. The foot section is made of TPU and mounted on the contour edge of the sole section by a thermal compressing process and has a front slice, two side slices and a top opening. The front slice is mounted on the contour edge of the sole section and covers a tiptoe part of the sole section. The side slices are mounted on the sole section and surround a heel part of the sole section. Each side slice has a front end overlapped and mounted on the front slice and a rear end overlapped and mounted on the rear end of the other side slice with a thermal compressing process. The top opening is formed and surrounded by the side slices.

Other objects, advantages and novel features of the invention will become more apparent from the following detailed description when taken in junction with the accompanying drawings.

### In the drawings:

Fig. 1 is a perspective view in partial section of a TPU rain boot in accordance with the present invention;
Figs. 2A and 2B are cross sectional side views of the TPU rain boot in Fig. 1 showing two slices be combined with each other with a thermal compressing process;
Fig. 3 is a block diagram of a method for manufacturing the TPU rain boot in Fig. 1;
Fig. 4 is an operational perspective view of the TPU rain boot in Fig. 1 being in use;
Fig. 5 is a perspective view of a conventional rain boot;
Fig. 6 is a perspective view of another conventional rain boot; and
Fig. 7 is an enlarged cross sectional side view of the conventional rain boot in Fig. 6.

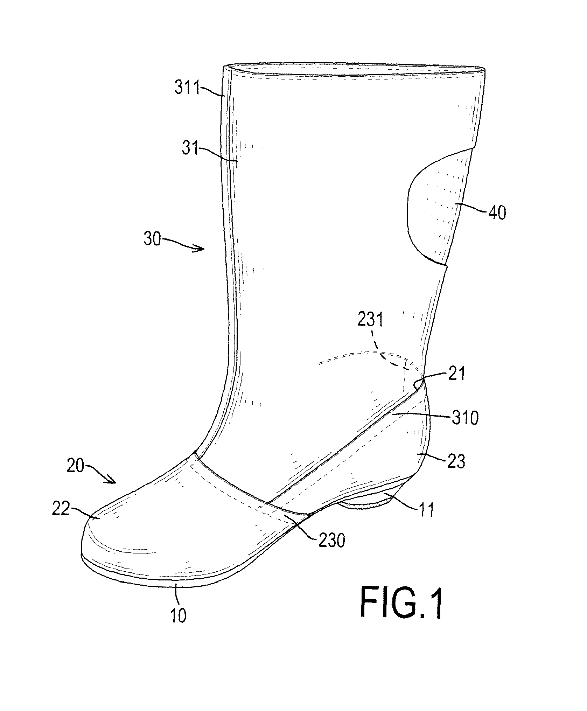

With reference to Fig. 1, a TPU rain boot in accordance with the present invention has a sole section 10, a foot section 20, a shank section 30 and a soft layer 40. The sole section 10 is shaped by a mold and has a contour edge, a tiptoe part, a heel part and a heel 11. The heel 11 is disposed at the heel part and protrudes from a bottom of the sole section 10. The heel 11 may be shaped in cylinder or taper and be a high heel or a low heel to improve aesthetic appeal of the TPU rain boot.

The foot section 20 is made of TPU (Thermoplastic Polyurethane) and thermoplastic. The TPU has many useful properties as elasticity, tenacity, abrasion and waterproof. The foot section 20 is mounted on the contour edge of the sole section 10 with a thermal compressing process or by a high frequency equipment to form a foot containing space and a bonding edge. The bonding edge is formed along the contour edge of the sole section 10 and is continued and sealed to provide a waterproof function.

The foot section 20 has a front segment, a rear segment, a top opening 21 and a top edge. The front segment of the foot section 20 covers the tiptoe part of the sole section 10 and is mounted on the contour edge of the sole section 10 with a thermal compressing process. The rear segment of the foot section 20 surrounds the heel part of the sole section 10 and is mounted on the contour edge of the sole section 10 with a thermal compressing process or by a high frequency equipment. The top opening 21 of the foot section 20 is formed from and surrounded by the front segment and rear segment of the foot section 20, is disposed above the heel part of the sole section 10 and communicates with the foot containing space of the foot section 20. The top edge of the foot section 20 is defined around the top opening 21 of the foot section 20.

The foot section 20 may be implemented by a front slice 22 and two side slices 23. The front slice 22 is mounted on the contour edge of the sole section 10 with a thermal compressing process and covers the tiptoe part of the sole section 10. The side slices 23 are mounted on the sole section 10 with a thermal compressing process, surround the heel part of the sole section 10 and are mounted around the top opening 21. Each side slice 23 has a front end and a rear end. The front ends of the side slices 23 are partially overlapped and connected with the front slice 22 by a thermo compression molding or a high frequency equipment and form a font seal 230. The font seal 230 is melted, compressed and bonded on the front slice 22 and is continued and sealed to provide a waterproof function. The rear ends of the side slices 23 are partially overlapped and connected with each other by a thermo compression molding or a high frequency equipment and form a rear seal 231. The rear seal 231 is melted, compressed and bonded on the rear end of the other side slice 23 and is continued and sealed to provide a waterproof function.

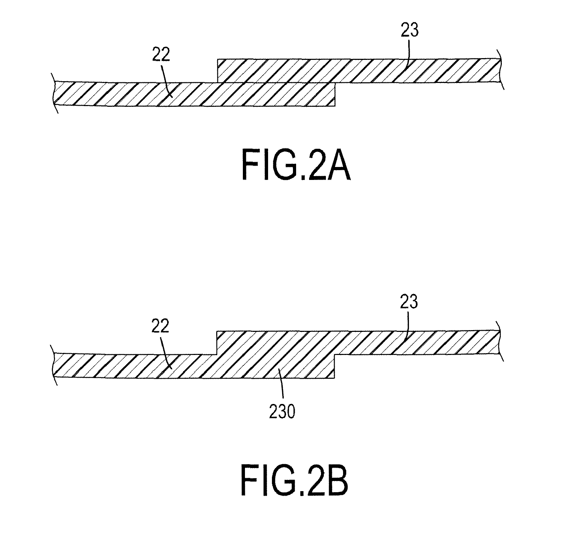

With reference to Figs. 2A and 2B, in the thermal compressing process applied to the front slice 22 and the side slices 23, the front end of the side slices 23 is overlapped partially with the front slice 22, then the side slices 23 and the front slice 22 are melted and compressed to bond together and form the front seal 230 and provide a waterproof function. The rear seal 231 is formed with a similar thermal compressing process as the front seal 230 and a description is omitted.

The shank section 30 is made of TPU and thermoplastic, is tubular and is mounted on the top edge of the foot section 20 by a thermo compression molding or a high frequency equipment. The shank section 30 may be implement by two shank slices 31, and each shank slice 31 has a bottom end and two sides. The bottom end of each shank slice 31 is partially overlapped and connected with the top edge of the foot section 20 with a thermal compressing process and form a bottom seal 310. The bottom seal 310 is melted, compressed and bonded on the foot section 20 and is continued and sealed to provide a waterproof function of the shank section 30 and the foot section 20.

The two sides of the shank slices 31 are respectively overlapped and connected with the two sides of the other shank slice 31 with a thermal compressing process to shape the shank section 30 tubular and form two side seals 311 and a wearing opening communicating with the foot containing space of the foot section 20. The side seals 311 are respectively melted, compressed and bonded on the side end of the other shank slices 31 and are respectively continued and sealed to provide a waterproof function of the shank section 30.

The soft layer 40 is sewed on an inner surface of the foot section 20 and an inner surface of the shank section 30 to provide a comfortable wearing effect.

Because of the TPU is thermoplastic, the shank section 30 is connected to the top edge of the foot section 20 with a thermal compressing process to form a bottom seal 310 with a waterproof function. The shank slices31 of the shank section 30 are connected to each other with a thermal compressing process to form two side seals 311 with waterproofing effect. If the foot section 20 or the shank section 30 is pierced through by something pointed object like a needle, the piercing hole may be easily closed up by the properties of the elasticity of the TPU. For the reason above, the soft layer 40 may be sewed on the inner surface of the foot section 20 and the shank section 30 but still keeps not permeable to water into the rain boot from the needle holes. Furthermore, the TPU may be decomposed naturally to reduce the environmental pollution.

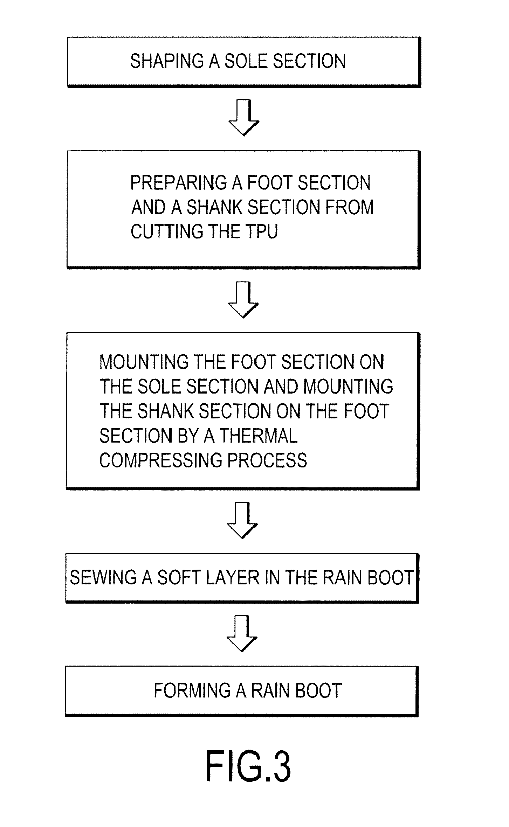

With reference to Fig. 3, the sole section 10 is shaped by an injection mold, and the foot section 20 and the shank section 30 are prepared by cutting a TPU sheet. The foot section 20 is mounted on the contour edge of the sole section 10 with a thermal compressing process, and the shank section 30 is mounted on the top edge of the foot section 20 with a thermal compressing process. The soft layer 40 is sewed on the inner surface of the foot section 20 and the inner surface of the shank section 30. A shoe-pad may be mounted into the boot on the sole section 10 to increase a comfortable wearing effect.

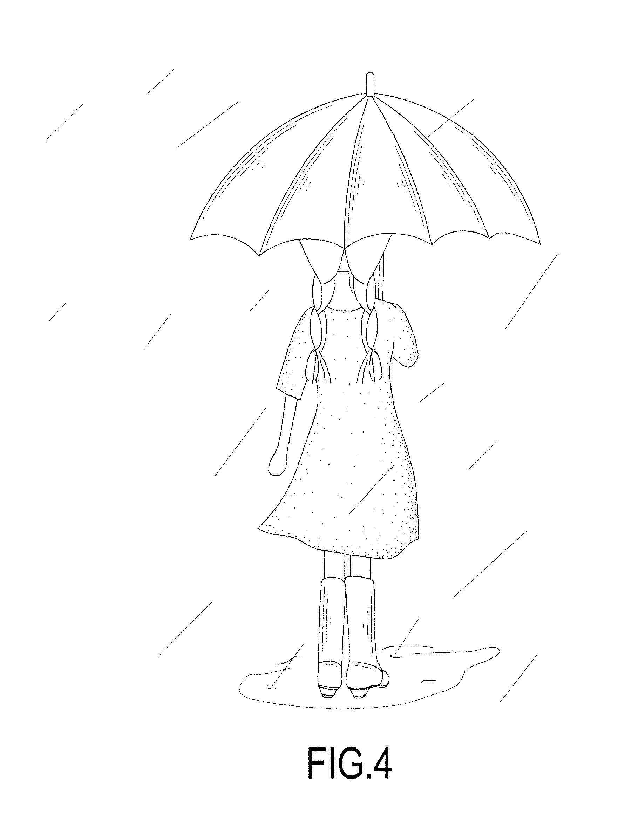

With reference to Fig. 4, in use, the boot in accordance with the present invention improves aesthetic appeal and provides a waterproof function and a comfortable wearing effect.

Even though numerous characteristics and advantages of the present invention have been set forth in the foregoing description, together with details of the structure and function of the invention, the disclosure is illustrative only. Changes may be made in detail, especially in matters of shape, size and arrangement of parts within the principles of the invention to the full extent indicated by the broad general meaning of the terms in which the appended claims are expressed.

## Claims

1. A TPU (Thermoplastic Polyurethane) rain boot **characterized in that** comprising:
a sole section (10) having a contour edge, a tiptoe part and a heel part; and
a foot section (20) made of TPU and mounted on the contour edge of the sole section (10) with a thermal compressing process and having
a front slice (22) mounted on the contour edge of the sole section (10) with a thermal compressing process and covering the tiptoe part of the sole section (10);
two side slices (23) mounted on the sole section (10) with a thermal compressing process and surrounding the heel part of the sole section (10), and each side slice (23) having
a front end overlapped and mounted on the front slice (22) by a thermo compression molding and formed a font seal (230); and
a rear end overlapped and mounted on the rear end of the other side slice (23) by a thermo compression molding and formed a rear seal (231); and
a top opening (21) formed and surrounded by the side slices (23).

2. The TPU rain boot as claimed in claim 1, wherein
the foot section (20) has a top edge defined around the top opening (21); and
a shank section (30) is tubular and mounted on the top edge of the foot section (20) with a thermal compressing process.

3. The TPU rain boot as claimed in claim 2, wherein the shank section (30) has two shank slices (31), and each shank slice (31) having
a bottom end overlapped and connected with the top edge of the foot section (20) with a thermal compressing process and formed a bottom seal (310); and
two sides respectively overlapped and connected with the two sides of the other shank slice (31) with a thermal compressing process to shape the shank section (30) tubular and form two side seals (311).

4. The TPU rain boot as claimed in claim 1 or 2, wherein a soft layer (40) is sewed on an inner surface of the foot section (20).

5. The TPU rain boot as claimed in claim 3, wherein a soft layer (40) is sewed on an inner surface of the foot section (20) and an inner surface of the shank section (30).
